# EUROPEAN PATENT APPLICATION

(11) **EP 0 893 378 A1**
(43) Date of publication of application: **27.01.1999**
(21) Application number: 98112323.5
(22) Date of filing: 03.07.1998
(51) Int. Cl.: B65G 47/51, B65G 1/127

(54) **Machine for regularizing flow along transfer lines for parallelepiped articles, particularly books**

(30) Priority: 23.07.1997 IT BG970033
(71) Applicant: MICROMEC di MARCHESI e C. S.n.C., 24061 ALBANO S. ALESSANDRO (Bergamo) (IT)
(72) Inventor: Madaschi, Eugenio, 24061 Albano S. Alessandro (Bergamo) (IT)
(74) Representative: Kratter, Carlo, Dr. Ing.

(57) **Abstract**

This machine for regularizing flow along production transfer lines for parallelepiped articles, particularly books, is interposed between two series-arranged processing machines in order to accumulate onto itself those parallelepiped articles which cannot be processed by the downstream machine because of possible technical impediments, and to re-insert them into the flow as soon as the downstream processing machine is available, said re-insertion being able to take place as replacement for a lacking flow by the upstream processing machine, said accumulation taking place by stepwise raising of the articles arriving on an appropriate roller table traversed transversely by pick-up brackets integrated into a respective vertically extending track link, when the downstream processing machine is inactive.

## Description

This invention relates to a machine for regularizing flow along transfer liners for parallelepiped articles, particularly books.

As is well known, in modern industries certain articles are produced or processed by the action of a plurality of processing machines arranged in series, such that as soon as one of them has completed its specific action, the next machine can act immediately afterwards. Each individual article is transferred from one machine to another along suitable "flow lines", generally consisting of conveyor belts or so-called "motorized roller tables". Hence it is apparent that any fault occurring in one machine could cause the stoppage of all the machines operating in that line. To prevent this, and hence enable the effective machines to continue to operate, stocks of articles already processed by the unusable machine must be available to an extent enabling the production cycle for the article to continue for the entire time required to restore the operation of the said unusable machine. This known "buffer" concept for absorbing irregularities in production flow has not yet found satisfactory expression in the publishing field, nor in similar industrial fields in which the article is both delicate and requires its substantially parallelepiped form to be orientated in a precise manner. An object of this invention is to define a machine suitable for regularizing the flow along transfer lines for parallelepiped articles, particularly books. A further object is to define a machine, as aforestated, which provides regularization by accumulating a large number of articles. A further object is to define a machine which restores the flow by inserting the previously accumulated articles in an extremely precise manner. A further object is to define a machine, as aforestated, which is suitable for different operating cycles in terms of parallelepiped shapes which can be of very different sizes. A further object is to define a machine, as aforestated, which has a small horizontal dimension. These and further objects will be shown to have been attained on reading the following detailed description, illustrating a machine for regularizing flow along production transfer lines for parallelepiped articles, particularly books, characterised by being interposed between two series-arranged processing machines in order to accumulate onto itself those parallelepiped articles which cannot be processed by the downstream machine because of possible technical impediments, and to re-insert them into the flow as soon as the downstream processing machine is available, said re-insertion being able to take place as replacement for a lacking flow by the upstream processing machine, said accumulation taking place by stepwise raising of the articles arriving on an appropriate roller table traversed transversely by pick-up brackets integrated into a respective vertically extending track link when the downstream processing machine is inactive.

The invention is illustrated by way of non-limiting example on the accompanying drawing, on which:
Figure 1 is a simplified view of a machine from the article entry end;
Figure 2 is a detail of the base of the machine shown in the preceding figure;
Figure 3 shows a plurality of article raising brackets forming a comb such that each can lie between two adjacent rollers of a loading table;
Figure 4 is a front view of a track link comprising three levels of pluralities of brackets of the preceding figure, of which the central level relates to a plurality of brackets movable towards the plurality of brackets of the upper level by utilizing appropriate slots;
Figure 5 shows three levels of pluralities of brackets in side view and consequently defined by the lateral brackets, and a pair of guide wheels for that track link to which the three pluralities of brackets pertain;
Figure 6 shows the three plurality levels of brackets of the preceding figure as a sectional view through the track link, which shows how the movement of the intermediate plurality level of brackets is achieved by the sliding of a specific operating chain;

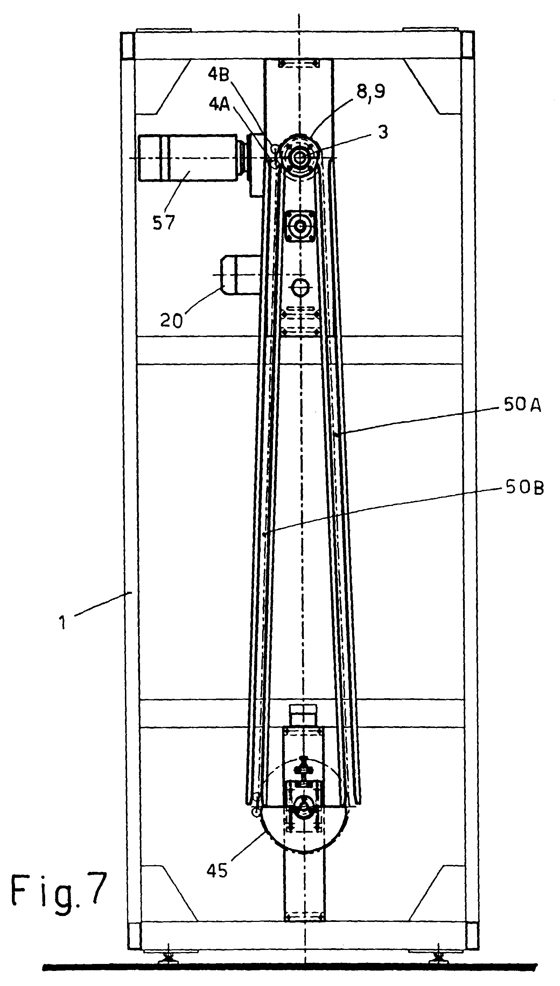

Figure 7 is an internal view of a detail of one of the sidepieces of the machine structure of Figure 1, showing two oblique channels, each enabling one of the two pairs of lateral wheels of each track link to slide and undergo reaction;
Figure 8 is a simplified schematic view of parts of the machine, in a view relating to article trnsit from right to left or vice versa;
Figures 9, 10, 11, 12 show constructional details of parts of the machine locatable from Figure 8;
Figure 13 is a view from above showing a table formed from motorized rollers between which there lie the constituent brackets of said plurality of levels of each track link;

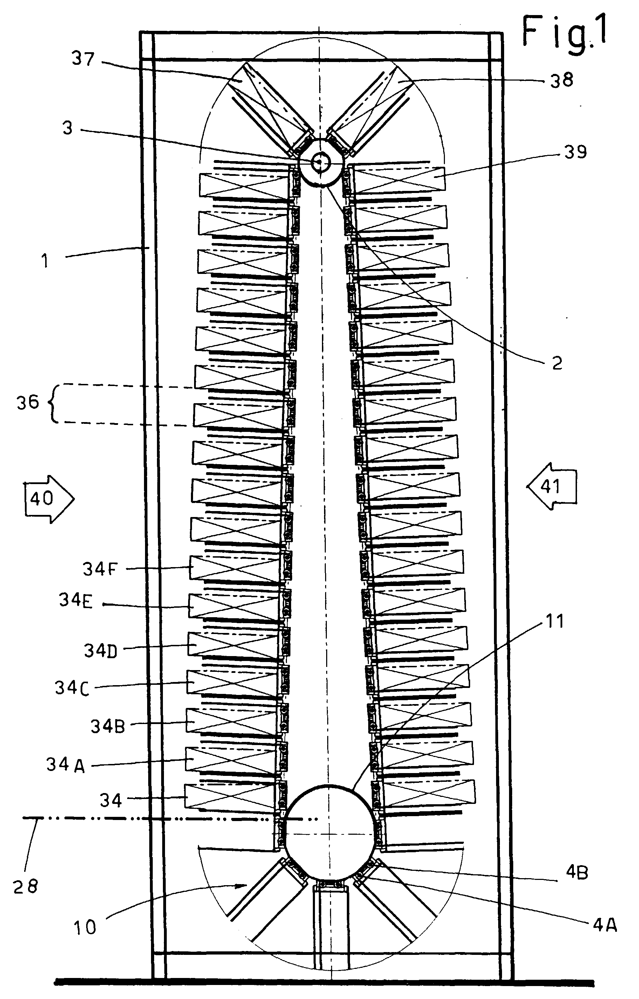

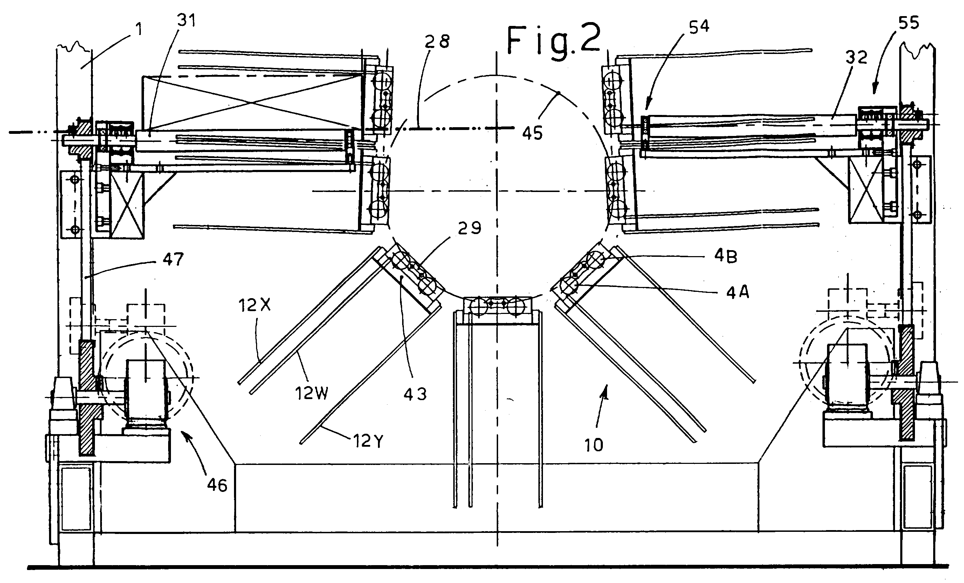

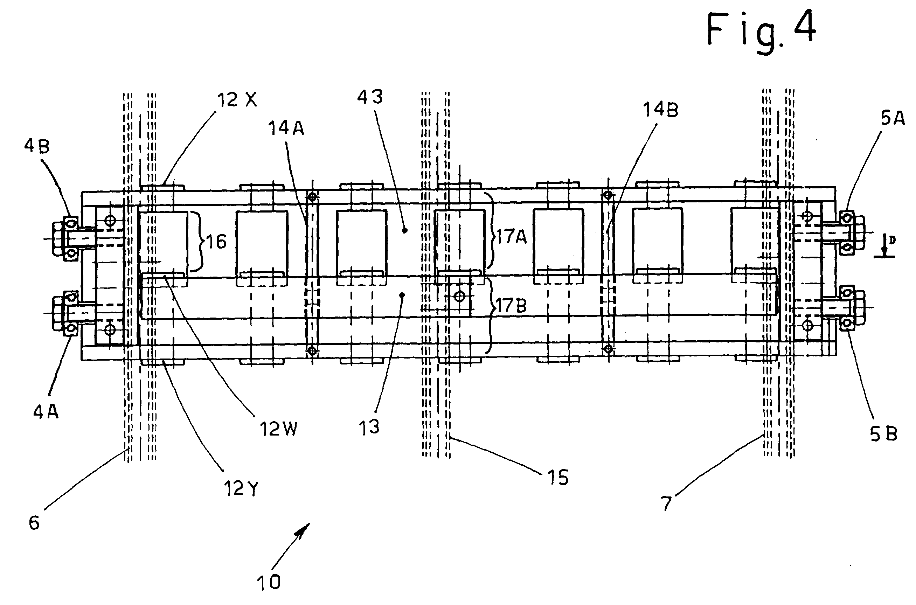

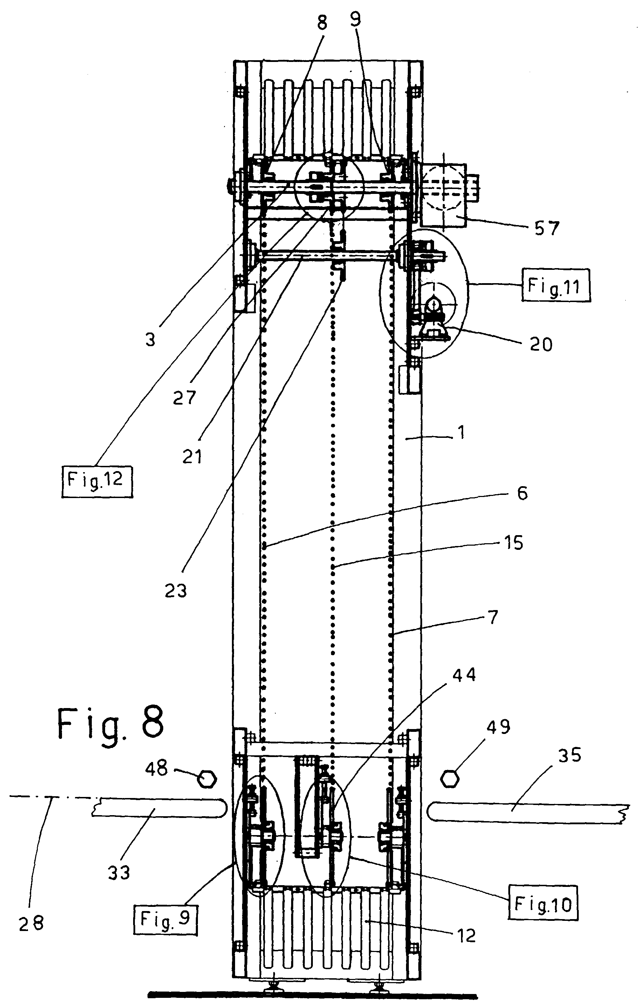

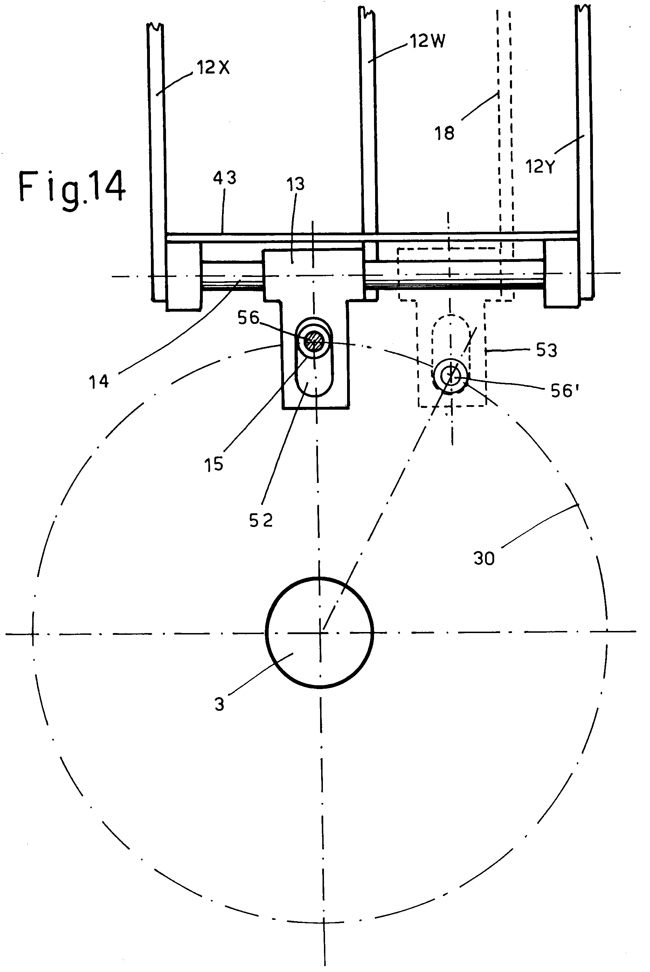

Figure 14 shows a slotted fixing for a crosspiece of a belt link. With reference to Figure 1, on a tower-shaped support structure 1 there is upperly supported a pair of profiled runways 2 of semicircular extension rigid with the structure 1. Pairs of wheels 4A-4B, 5A-5B rest on these profiled runways (see also Figure 4). A drive shaft 3 is associated with a pair of lateral sprocket wheels 8, 9 engaging (Figure 8) respective link chains 6, 7 passing about a respective lower sprocket wheel 45. On a link 29 of each of said chains 6 and 7 there is fixed a flat structure 43 in the manner illustrated in Figure 2, such that said structure can be considered as a particular track link 10. From this figure it is also clear that the chains 6 and 7 must have a pitch such as to allow, by a multiple thereof, the relative positioning of the links 29, which are separated from each other by chain links which are similar but are without said track link structures 10.

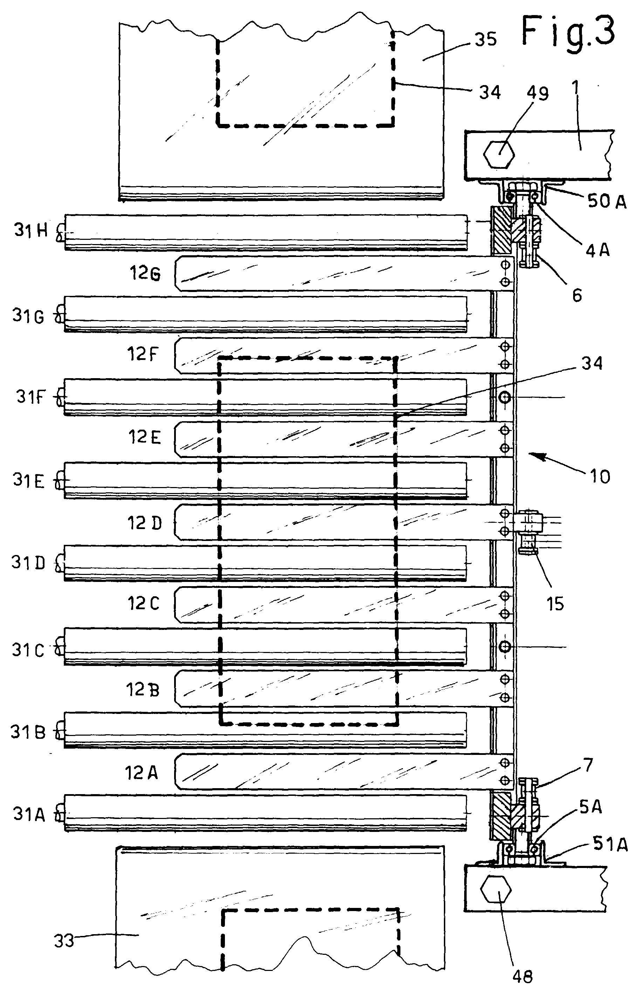

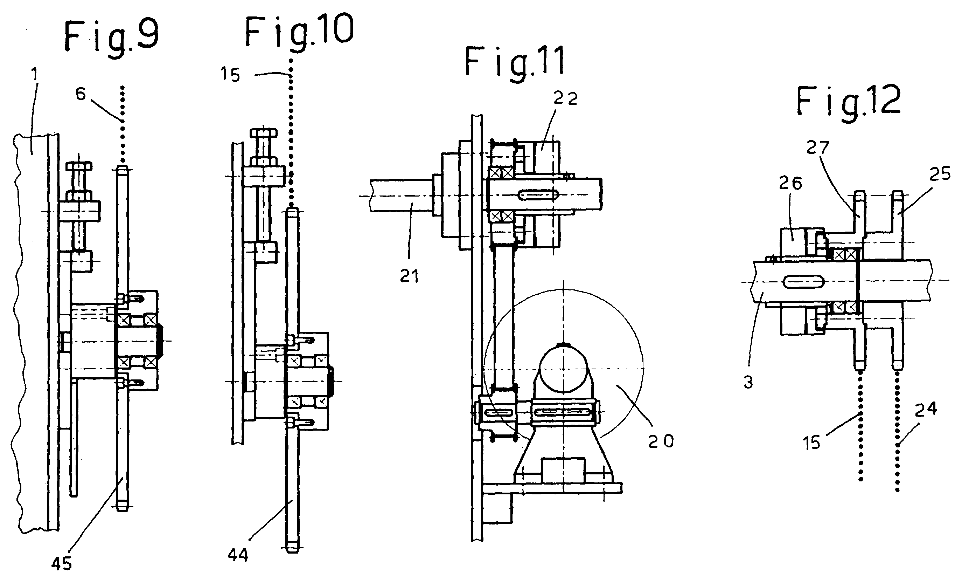

On the ends of said track links 10 there are provided two pairs of wheels 4A-4B, 5A-5B (Figures 1, 3), which define the path of the track. The track formed in this manner by the links 10 acquires the configuration shown in Figure 1, as does the arrangement of the two chains 6 and 7 which allow it. Said configuration shows the track maintained taut by the wheels 4A-4B, 5A-5B resting on the end semi-cicumferences of the respective profiles, defined by the upper pair of profiled runways 2 and by another pair of lower profiled runways 11. Said tension is provided by usual means, of the type shown in Figures 9 and 10. After traversing the semi-circumferences of the profiled runways 2 and 11, the said four wheels penetrate into channels 50A-50B, 51A-51B, to provide a pair of reactive forces for the rigid support of the links 10. The chains 6 and 7 pass about respective sprocket wheels, of which the pair 8, 9 present upperly on the shaft 3 is the drive pair, which drives the said track formed by the links 10. Consequently, from the aforegoing the links 10 form a large track which slides vertically within a support structure 1 in the form of a tower.

Each track link 10 is provided with brackets 12 which in Figure 3 are indicated by 12A, 12B, 12C, 12D, 12E, 12F, 12G. This plurality of brackets 12 gives the individual link 10 a comb configuration. In this respect the brackets are positioned side by side, parallel to each other in the same plane, to define a specific plurality at their own level. Each track link comprises three pluralities of brackets, arranged on three levels X, Y, W.

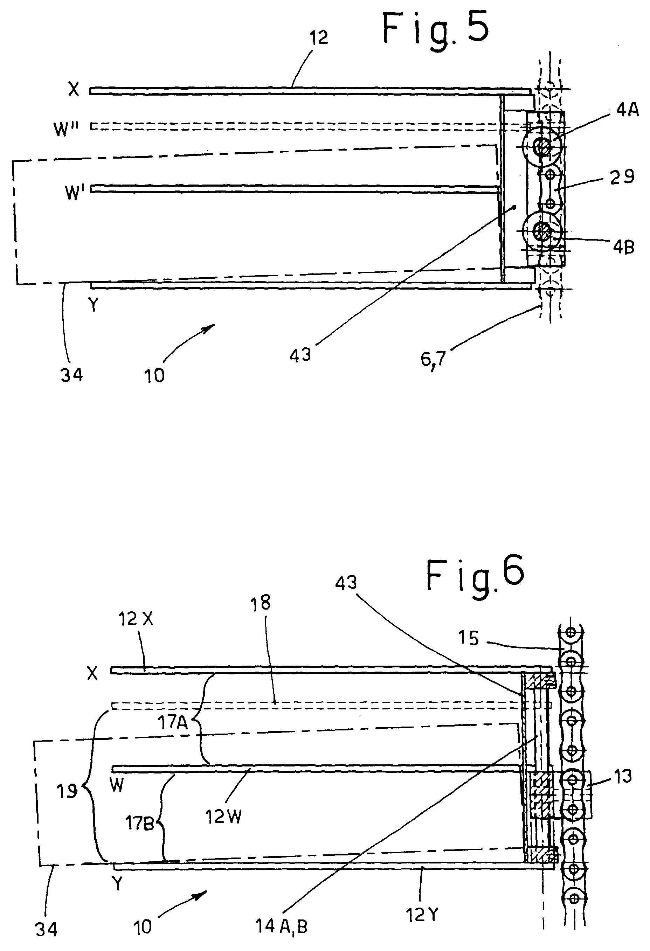

Of these, the levels X and Y are fixed, whereas the central level W is movable from an intermediate position W' to a position W'' close to the upper level X (Figures 5, 6). The plurality of brackets 12W (Figure 6) is fixed to the link 10 indirectly. In this respect, it is fixed onto a crosspiece 13 slidable on small guide columns 14, 14A, 14B perpendicular to the brackets 12 and consequently lying in the plane of the flat structure 43 of the links 10. Said sliding is determined by the action of a chain 15 intermediate between the chains 6 and 7 and passing about a lower sprocket wheel 44. This sliding is limited to a short travel stroke 16 (Figure 4), necessary for moving the plurality 12W from an intermediate position, at two equal distances 17A, 17B, to another end position 18 at a greater useful distance 19 from the lower plurality 12Y (Figure 6). This short travel stroke 16 is determined by the action of a geared motor 20 which acts on a transmission shaft 21 via an electromagnetic clutch 11. On the transmission shaft 21 there is provided a sprocket wheel 23 connected by a specific chain 24 (Figure 12) to another sprocket wheel 25 mounted idle on the shaft 3. By means of an electromagnetic clutch 26 the sprocket wheel 25 is rigidly engaged with another sprocket wheel 27 about which there passes the chain 15 joining all the pluralities 12W of links 10. In this manner the geared motor 20 rotates through a certain angle the sprocket wheel 27 which, by means of the chain 15, moves the plurality of brackets 12W to the required position. All this is achieved while the shaft 3, by remaining at rest, maintains at rest the two sprocket wheels 8 and 9 and hence the lateral chains 6 and 7 rigid with the body of the flat structure 43 of the individual links 10, or with the plurality of fixed brackets 12X and 12Y. In Figure 1, the reference numeral 28 indicates the level of a horizontal table on which there slides the flow of parallelepiped articles to be regularized by the action of the machine of the invention. This level is also indicated in Figure 2 and enables the location of those machine parts present in this figure but omitted in Figure 1 for simplicity to be better understood, so better clarifying the description.

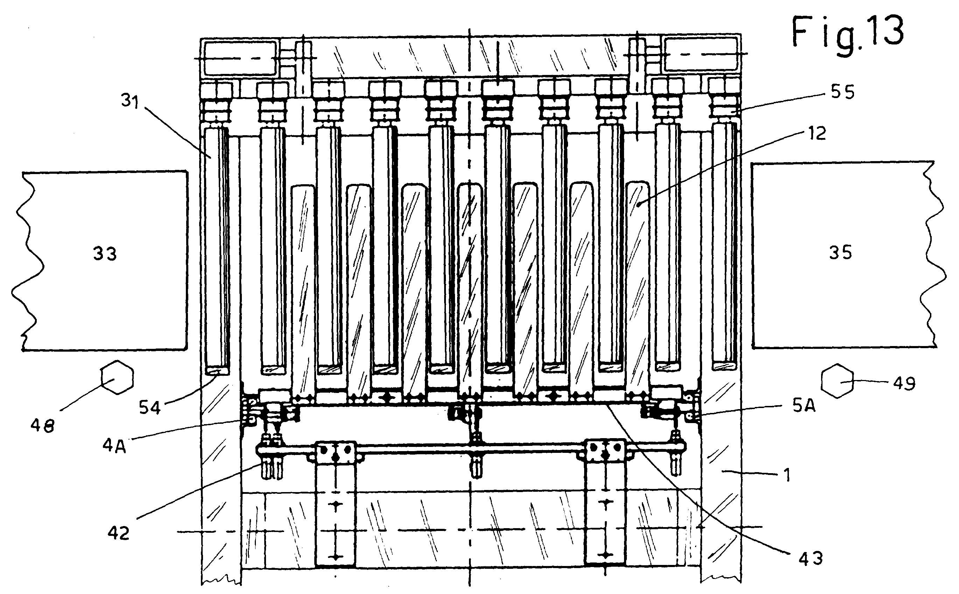

From Figure 2 it can be seen that said level 28 of the slide table for the flow of articles is determined substantially by a series of rollers 31 having one end supported by the upper end of vertical bars 54 fixed to the structure 1 (Figures 2, 13). The rollers 31 are motorized by a belt transmission 47 driven by a usual geared motor unit 46 to rotate the various rollers 31 via usual pairs of toothed pulleys 55. The plan arrangement of the rollers 31 is shown in Figure 3, in which they are indicated by 31A, 31B, 31C, 31D, 31E, 31F, 31G, 31H. Between them there operate the brackets 12A, 12B, 12C, 12D, 12E, 12F, 12G of each said plurality level 12X, 12Y, 12W.

Downstream of said roller table 31 there operates a conveyor belt 33 which transsfers articles 34 onto it. These articles are equidistantly spaced by the normal feeding action of the conveyor belt, effected by the processing machine positioned upstream of the flow. This distance is also maintained when they pass at speed along the roller table 31 and when they are transferred therefrom onto another conveyor belt 35 positioned downstream.

The roller table 31 hence provides flow continuity between the upstream conveyor belt 33 and the downstream conveyor belt 35.

This continues until a sensor senses a possible operational impediment in the downstream processing machine. In this event the downstream conveyor belt stops, and at the same time the regularizing machine of the invention intervenes. This intervention causes the side of the track links 10 to advance upwards, causing the brackets 12 to rise until they make contact with the article 34 in transit on the driving rollers 31, to halt it by raising it through one track step 36 (Figure 1). As soon as a further article arrives, the machine immediately causes its track to advance through another step. Proceeding in this manner, as soon as further articles 34 arrive on the roller table 31, they are raised and conveyed upwards stepwise, to fill the various seats offered to the articles 34 by the various links 10. Each track link is used in this manner to contain a respective article 34A, 34B, 34C, 34D, 34E, 34F, etc., picked up from the roller table 31 and raised upwards step by step. When a track link reaches the top curvature about the profiled runways 2, it tends to turn over partially as shown by the articles 37, 38, then to turn over totally as illustrated by the position of the article 39. This inversion takes place without damaging impact to the article, because of the fact that the plurality of brackets 12W can be positioned at a distance from the plurality of base brackets 12Y by slightly more than the thickness of the parallelepiped article handled. This overturning imposed on the articles means that an article picked up from a front side 40 can be stored in a rear side 41 of the machine, by using the track links 10 available thereat. If the number of articles stored by one track is insufficient, the described machine can be associated with other innumerable like machines, to hence form a store of theoretically unlimited capacity. To achieve this, it is necessary merely to arrange another motorized roller table 32 (identical to 31) on the rear side 41 of the machine, identical to that present on the front side 40. This can be seen from Figure 2. The machine has been considered heretofore in terms of its ability to pick up from the roller table 31. However, as initially stated, the object of the machine is to regularize the flow of articles, and this pick-up ability must therefore be reversible. In this respect, the machine is able to effect said steps 36 both in ascent and in descent, without any predetermined order of sequence, this order of ascent and descent being only imparted by its sensors in detecting the operating situation.

Hence, for example, the machine can allow thirtyfive articles to transit, then pick up twentyseven of them, then yield eight of them etc, ie any quantity at any moment, in which the articles can be accumulated in any number to be then returned in any required sequence. In this respect, it is obvious that as soon as an article at rest, supported by the plurality of base brackets 12Y, is brought into contact with the always rotating rollers 31, it is dragged by them and conveyed onto the downstream conveyor belt 35, as the various brackets 12A, 12B, 12C. . . . descend simultaneously between the various rollers 31 below their contact summits. The stepwise movement 36 is generated by a geared motor unit 57 which rotates the drive shaft 3. This unit is regulated electronically by the known digitally controlled brushless motor technique. This control enables the track links 10 to always advance through the same length, independently of any wear or elongation to which chain linkages are typically subjected. This control is achieved by a predetermined number of pulses starting from an intermediate travel position, sensed by usual proximity sensors 42 (Figure 13) on suitable projections arranged on each track link. In this manner, the motor 57 starts rotating to cause the track to undergo its travel distance 36, and continues until a reference point is reached, indicated to it by the proximity sensors 42 (Figure 13).

From this point onwards, the motor 57 proceeds, controlled by a predetermined number of pulses, corresponding exactly to the travel distance still to be undergone by the track to reach its exact final point. To achieve its initial travel stage, the motor is free to undergo all the turns necessary for the purpose, as required by the need to take up the chain slack by rotation through specific angles, to be added to the effective angles of rotation which can be undergone only after engagement occurs between those parts which have approached each other into contact, in overcoming the wear-generated slack which had kept them apart.

This procedure is valid in both directions of rotation, it being always during the initial stage of the pulling movement that the mechanical slack is taken up. The exact moment for initiating the rising movement of the links 10 by the said geared motor 57 is identified by usual photoelectric sensors 48 (Figures 3, 8), arranged in a geometrical position such as to intercept the article 34 in transit. The brackets 12 hence make contact with the article 34, to lift it at the exact moment in which it reaches (in undergoing its rapid movement provided firstly by the upstream belt 33 and then by the rollers 31) the fixed position in which they operate. The same principle is also valid during the descent stage, in which however the positions are indicated by other sensors arranged in suitable positions. The pulses provided by said photoelectric sensors 48 are processed, in accordance with usual electronic logic, in order to detect when during the ordered sequence of the articles in transit one or more are missing.

When such a situation is encountered, the motor 57, associated with a reduction gear, is activated by known electronic methods, to cause the links 10 to rise or descend in order to supply one or more articles in their ordered flow sequence. With regard to the machine operating logic, this can have the following properties.

The fact of it being electronically governed gives it a large availability of controls effected by usual digital logic, as is apparent from the following examples. When the photoelectric cell 48 indicates that an article has arrived, a cycle is started defined by an initial "zero", which becomes one" while the raising is underway, to become "zero" again in initiating the next cycle. This zeroing is implemented either by an indication of the completion of the required upward travel 36, or by an indication by the exit photoelectric 49 that the article has left the roller table 31. This latter possibility represents normality, and is maintained by an enabling signal indicating that the downstream processing machine is available to receive. If, while the said count is at the "one" stage, a further pulse should arrive from the entry photoelectric cell 48, the value "one plus one" would be generated, which is incompatible with the program and would therefore cause the machine to halt, as this phenomenon expresses a spacing between the articles which is outside the flow regularity required for said (forward) stepwise advancements of the machine. In this case, flow regularization requires a manual corrective intervention by the operator. Each article loaded in order one after another onto the machine is counted, so that if when "reinserting" the previously withdrawn articles into the flow it is found that at a certain descent through one step the required deposition of the article onto the roller table does not take place, the machine stops. In this respect, if the machine had stored for example ten articles, it would consider it logical to effect ten descent or return steps. It therefore proceeds until all ten articles have been subtracted from its previous count, without any break in continuity. With reference to Figure 14 it can be seen that the crosspiece 13 (rigid with the bracket 12W) is connected to a pin 56 of its drive chain 15, passing about a theoretical circumference 30, via a slot 52. In this respect it can be seen from Figure 14 that if the crosspiece were to assume the position 53 to locate the intermediate brackets 12W in the position 18 (shown by dashed lines), for equal positions of the flat structure 43 of the track link the chain pin 56' would assume a position further from the slider columns 14, a position consequently requiring the presence of the slot 52.

## Claims

1. A machine for regularizing flow along production transfer lines for parallelepiped articles (34), particularly books, characterised by being interposed between two series-arranged processing machines in order to accumulate onto itself those parallelepiped articles which cannot be processed by the downstream machine because of possible technical impediments, and to re-insert them into the flow as soon as the downstream processing machine is available, said re-insertion being able to take place as replacement for a lacking or irregular flow by the upstream processing machine, said accumulation taking place by stepwise raising of the articles arriving on an appropriate roller table (31) traversed transversely by a plurality of article support brackets (12X, 12W, 12Y) all integrated into a respective vertically extending track link (10), when the downstream processing machine is inactive.

2. A machine as claimed in the preceding claim, characterised by a vertically extending track composed of large links (10) formed by anchoring a flat structure (43) thereof to chain links (29) spaced apart by a number of chain link pitches sufficient to enable the track links (10) to remain correctly side by side along the rectilinear track portions (50A-50B, 51A-51B), said track links being of considerable overall size to offer the functional presence of the plurality of brackets (12).

3. A machine as claimed in the preceding claim, characterised by track links (10) provided at their ends with a flat structure (43) on which there are pivoted two pairs of wheels (4A-4B, 5A-5B) provided for rollingly resting on two upper profiled runways (2) and on two lower profiled runways (11), and for insertion into vertical channels (50A-50B, 51A-51B) for guiding and reactively supporting said flat pivoting structure, from said flat pivoting structure there projecting in a substantially perpendicular direction the plurality of brackets (12) provided for supporting the articles (34) to be contained by the machine.

4. A machine as claimed in the preceding claims, characterised by track links (10) each provided with three levels (X, Y, Z) of pluralities of brackets (12, 12X, 12Y, 12W), of which the upper and lower levels (X, Y) are fixed, whereas the intermediate level (W) is movable in order to:
- divide the link (10) into two equal seats (17A, 17B) to contain two parallelepiped articles (34) of small thickness;
- limit the distance between the lower level (Y) and the intermediate level (W) to the minimum possible value to reduce the height of fall of the article (34) onto the plurality if intermediate brackets (12W) during the inversion stage (37, 38, 39) involved in passage from the front side (40) to the rear side (41) of the machine;
- increase to a maximum the distance between the lower level (Y) and the intermediate level (W) to offer a seat for parallelepiped articles of large thickness.

5. A machine as claimed in the preceding claims, characterised by an intermediate plurality level of link brackets (12W) which has the facility to be varied simultaneously in all the track links (10), said facility being provided by connecting a crosspiece (13), supporting the intermediate plurality of brackets (12W), to a link of a slidable chain (15) located in an intermediate position to, and undergoing a path analogous to, that of the two link chains (6, 7) which support the track links (10) by means of their spaced-apart links (29), said sliding of the intermediate chain (15) taking place in cooperation with a relative steadiness of the flat pivoting structure (43) of a link (10) determined by the connection of this latter (29) to the lateral chains (6, 7).

6. A machine as claimed in the preceding claim, characterised by a short sliding (16) of the intermediate chain (15) deriving from the action of a geared motor (20) which acts on a transmission shaft (21) via an electromagnetic clutch (22), on the transmission shaft (21) there being provided a first sprocket wheel (23) connected by a specific chain (24) to a second sprocket wheel (25) mounted idle on a drive shaft (3) of the machine, the second sprocket wheel (25) being rigidly connectable via an electromagnetic clutch (26) to a third sprocket wheel (27) about which there passes the intermediate chain (15) which unites all the intermediate pluralities (12W) of links (10) maintained at rest by their respective chains (6, 7) which include the anchoring links (29).

7. A machine as claimed in the preceding claims, characterised by stepwise (36) movement of the link (10) determined by a motor unit (57) driving the machine drive shaft (3) by digital electronic brushless electric motor control, said control taking place via a predetermined number of pulses starting from an intermediate travel position sensed by usual magnetic proximity sensors (42) on suitable projections provided on each track link (10), in this manner the motor (57) being able to start in order to cause the track to undergo its travel stroke through one step (36) and being able to proceed as far as a reference point indicated to it by the proximity sensors, from this point onwards the motor (57) proceeding controlled by a predetermined number of pulses corresponding exactly to one half of the travel stroke still to be undergone by the link (10), the described movement always resulting in advancement steps (36) which are rigorously precise and constant, independently of the wear of the mechanical parts involved in said transmission.

8. A machine as claimed in the preceding claims, characterised by an electric motor (57) which commences its rotation following the receipt of an electrical pulse provided by a photoelectric sensor (48) positioned at the entry to the roller table (31) in a position such as to determine contact between the base of the article (34) moving on the motorized rollers (31) and the upper surface of the lower plurality (12Y) of brackets when the article is located substantially at the centre of it (12Y), said rotation commencing only when other sensors have indicated an impediment in regular continuation of rectilinear flow from the roller table (31) to the conveyor belt (35) positioned downstream.

9. A machine as claimed in the preceding claims, characterised by a further roller table (32) on its rear side (41) for the purpose of feeding the articles to other utilization equipment, said utilization possibly consisting of a further accumulation of them, said further accumulation being able to be achieved by combination with further machines of the type according to the invention.

10. A machine as claimed in the preceding claims, characterised by anchoring the crosspiece (13), supporting the slidable (14) intermediate brackets (12W), to the pin (56) of its drive chain (15) via a slot (52) for compensating the variations in distance from the guide columns (14) and from the flat structure (43) required by the movement of the pin (56) along the theoretical circumference (30) about which the chain (15) passes.
